# EUROPEAN PATENT APPLICATION

(11) **EP 4 726 379 A1**
(43) Date of publication of application: **15.04.2026**
(21) Application number: 24822271.3
(22) Date of filing: 26.02.2024
(51) Int. Cl.: G01N 23/046

(54) **TESTING DEVICE, AND TESTING METHOD FOR BATTERY CELL TESTING**

(30) Priority: 12.06.2023 CN 202310695770
(71) Applicant: NUCTECH COMPANY LIMITED, Beijing 100084 (CN); Tsinghua University, Haidian District, Beijing 100084 (CN)
(72) Inventor: CHEN, Zhiqiang, Beijing 100084 (CN); LI, Yuanjing, Beijing 100084 (CN); ZHANG, Li, Beijing 100084 (CN); LI, Liang, Beijing 100084 (CN); HONG, Mingzhi, Beijing 100084 (CN); CHANG, Ming, Beijing 100084 (CN); WANG, Zinan, Beijing 100084 (CN)
(74) Representative: Cabinet Beau de Loménie
(86) International application number: PCT/CN2024/078558
(87) International publication number: WO 2024/255313

(57) **Abstract**

A detection device and a detection method for detecting a battery cell. The detection device includes a supporting mechanism (10), a rotatable mechanism (20), a conveying mechanism (30), and a detection mechanism (40). The rotatable mechanism (20) is provided on the supporting mechanism (10); the conveying mechanism (30) is configured to convey a battery cell (200); the detection mechanism (23) is provided on the rotatable mechanism (20), and the detection mechanism (23) includes a radiation source (231) and a detector (232), the radiation source (231) and the detector (232) are configured to detect the battery cell (200) on the conveying mechanism (30), and the radiation source (2312) and the detector (232) are rotatable circumferentially on the rotatable mechanism (20).

## Description

This application claims the benefit of priority to Chinese Patent Application No. 202310695770.1 filed on June 12, 2023, the content of which is incorporated herein by reference in its entirety.

### TECHNICAL FIELD

The present disclosure relates to a field of a non-destructive detection, and in particular to a detection device and a detection method for detecting a battery cell.

### BACKGROUND

With a continuous expansion of the demand for lithium batteries, the market has higher requirements for the quality of lithium batteries. At present, consistency requirements for lithium batteries, especially for power batteries, are becoming increasingly stringent. In related art, existing industrial CT solutions are used, in which a detector and an optical machine are stationary to scan a battery cell, so that high requirements are placed on a position accuracy and a deformation of an angular position of the battery cell to be detected. In a detection process, due to objective factors such as a position of the battery cell and an angular deformation of the battery cell, it is difficult to improve a detection quality, and a misjudgment rate may be excessively high.

### SUMMARY

The present disclosure provides a detection device.

The present disclosure further provides a detection method for detecting a battery cell using the detection device described above.

According to embodiments in a first aspect of the present disclosure, a detection device is provided. The detection device includes a supporting mechanism, a rotatable mechanism, a conveying mechanism, and a detection mechanism. The rotatable mechanism is provided on the supporting mechanism; the conveying mechanism is configured to convey a battery cell; the detection mechanism is provided on the rotatable mechanism, and the detection mechanism includes a radiation source and a detector, the radiation source and the detector are configured to detect the battery cell on the conveying mechanism, and the radiation source and the detector are rotatable circumferentially on the rotatable mechanism.

In the detection device according to embodiments of the first aspect of the present disclosure, the rotatable mechanism is arranged on the supporting mechanism, and the detection mechanism is arranged on the rotatable mechanism. The detection mechanism may rotate circumferentially on the rotatable mechanism. The conveying mechanism is used to convey the battery cell. When it is required to detect the battery cell using the detection device, the conveying mechanism conveys the battery cell to a detection region, and the radiation source and the detector of the detection mechanism rotate circumferentially on the rotatable mechanism to detect the battery cell located in the detection region. It should be noted that the detection region is a region between lines connecting the radiation source and the detector, and the detection mechanism may detect the battery cell in that region. Through a circumferential rotation on the rotatable mechanism, the detection mechanism may perform a multi-directional detection on the battery cell, so as to detect alignment and welding of pole pieces of each battery cell, without requirements for a placement position and a placement angle of the battery cell on the conveying mechanism.

In some embodiments, the rotatable mechanism includes a rotatable bracket provided on the supporting mechanism and a rotatable disk rotatable circumferentially relative to the rotatable bracket, and the rotatable disk is configured to fix the radiation source and the detector
In some embodiments, the radiation source and the detector are movable in a diameter direction of the rotatable disk so that the radiation source and the detector are switched between a detection position and an avoidance position.

In some embodiments, a movable mechanism is provided between the rotatable mechanism and the supporting mechanism, and the movable mechanism is configured to cause a relative displacement of the rotatable mechanism on the supporting mechanism.

Optionally, the movable mechanism is configured as a rotatable table, and the rotatable mechanism is rotatable relative to the supporting mechanism under support of the rotatable table.

Further, optionally, the movable mechanism is configured as a translation mechanism, the rotatable mechanism is movable in a first direction and a second direction under support of the translation mechanism, the first direction is parallel to a rotation axis of the detection mechanism, and the second direction is perpendicular to the rotation axis of the detection mechanism.

In some embodiments, the conveying mechanism extends parallel to a rotation axis of the detection mechanism, or a positioning mechanism extends perpendicular to a rotation axis of the detection mechanism.

In some embodiments, the conveying mechanism further includes a plurality of positioning modules arranged at intervals, and the positioning module is configured to position the battery cell.

According to embodiments in a second aspect of the present disclosure, a detection method for detecting a battery cell by using a detection device is provided, the detection method includes: providing a battery cell on a conveying mechanism; conveying the battery cell to a detection region by using the conveying mechanism; and detecting the battery cell by using a detection mechanism.

In some embodiments, the battery cell is placed at a predetermined angle when the battery cell is provided on the conveying mechanism, and the predetermined angle is in a range from 15° to 75°.

In some embodiments, the detection method further includes: before detecting the battery cell by using the detection mechanism, driving, by using a rotatable disk, the radiation source and the detector to rotate by an angle to avoid the battery cell; conveying the battery cell to a detection region by using the conveying mechanism; driving, by using the rotatable disk, the radiation source and the detector to rotate circumferentially to detect the battery cell; and conveying the battery cell to move out of the detection region by using the conveying mechanism.

In some embodiments, the detection method further includes: before detecting the battery cell by using the detection mechanism, driving, by using a rotatable disk, the radiation source and the detector to rotate circumferentially; switching the radiation source and the detector from a detection position to an avoidance position; conveying the battery cell to move to a detection region by using the conveying mechanism; switching the radiation source and the detector from an avoidance position to a detection position; driving, by using the rotatable disk, the radiation source and the detector to rotate circumferentially to detect the battery cell; and conveying the battery cell to move out of the detection region by using the conveying mechanism.

In some embodiments, the conveying mechanism includes reciprocating conveying mechanisms provided on both sides of the detection mechanism, and the detection method further includes: before detecting the battery cell by using the detection mechanism, driving, by using a rotatable disk, a radiation source and a detector to rotate circumferentially; moving two battery cells to a detection region by respectively using the reciprocating conveying mechanisms located on both sides of the detection mechanism; driving, by using the rotatable disk, the radiation source and the detector to rotate circumferentially to detect the battery cells; and moving the battery cells out of the detection region by using the two reciprocating conveying mechanisms.

In some embodiments, the detection method further includes: before detecting the battery cell by using the detection mechanism, rotating the rotatable mechanism to a predetermined angle. The predetermined angle is in a range from 15° to 75°.

In some embodiments, the detection method further includes: before detecting the battery cell by using the detection mechanism, driving, by using a rotatable disk, a radiation source and a detector to rotate circumferentially; switching the radiation source and the detector from a detection position to an avoidance position; conveying the battery cell to move to a detection region by using the conveying mechanism; switching the radiation source and the detector from the avoidance position to the detection position; driving, by using the rotatable disk, the radiation source and the detector to rotate circumferentially to detect the battery cell; and conveying the battery cell to move out of the detection region by using the conveying mechanism.

Additional aspects and advantages of the present disclosure may be partially provided in the following description, or partially become clear from the following description, or may be understood through practice of the present disclosure.

### BRIEF DESCRIPTION OF THE DRAWINGS

The above and/or additional aspects and advantages of the present disclosure will become clear and easily understood from the description of embodiments in conjunction with the following drawings. In the drawings:
FIG. 1 shows a front view of a detection device according to embodiments in a first aspect of the present disclosure;
FIG. 2 shows a top cross-sectional view of a detection device according to embodiments in a first aspect of the present disclosure;
FIG. 3 shows a schematic diagram of a third embodiment of a detection device according to embodiments in a first aspect of the present disclosure;
FIG. 4 shows a schematic diagram of a fourth embodiment to a sixth embodiment of a detection device according to embodiments in a first aspect of the present disclosure; and
FIG. 5 shows a schematic diagram of a seventh embodiment of a detection device according to embodiments in the first aspect of the present disclosure.

Reference numerals: detection device 100, supporting mechanism 10, rotatable mechanism 20, rotatable bracket 21, rotatable disk 22, detection mechanism 23, radiation source 231, detector 232, rotating connector 24, position sensor 25, conveying mechanism 30, positioning module 31, first positioning portion 311, second positioning portion 312, movable mechanism 40, rotatable table 41, translation mechanism 42, selection mechanism 50, battery cell 200.

### DETAILED DESCRIPTION OF EMBODIMENTS

Embodiments of the present disclosure will be described in detail below. Examples of embodiments are shown in the accompanying drawings, in which the same or similar reference numerals throughout represent the same or similar elements or elements having the same or similar functions. Embodiments described below with reference to the accompanying drawings are exemplary and are just used to explain the present disclosure, and should not be construed as limiting the present disclosure.

In the description of the present disclosure, it should be understood that the terms "center", "longitudinal", "lateral", "length", "width", "thickness", "up", "down", "front", "back", "left", "right", "vertical", "horizontal", "top", "bottom", "inside", "outside", "clockwise", "counterclockwise", "axial", "radial", "circumferential", etc., are used to indicate orientations or positional relationships shown based on the accompanying drawings, which are intended to facilitate the description of the present disclosure and simplify the description, rather than indicate or imply that the device or element referred to must have a specific orientation or must be constructed or operated in a specific orientation, and therefore should not be construed as limiting the present disclosure. In addition, features defined with "first" or "second" may explicitly or implicitly include one or more such features. In the description of the present disclosure, unless otherwise specified, "a plurality of" means two or more.

In the description of the present disclosure, it should be noted that unless otherwise expressly specified and limited, the terms "installed", "interconnected" and "connected" should be understood in a broad sense. For example, it may indicate a fixed connection, a detachable connection, or an integral connection; it may indicate a mechanical connection or an electrical connection; and it may indicate a direct connection, an indirect connection through an intermediate medium, or an internal communication of two elements. For those of ordinary skilled in the art, the specific meanings of the above terms in the present disclosure may be understood according to actual situations.

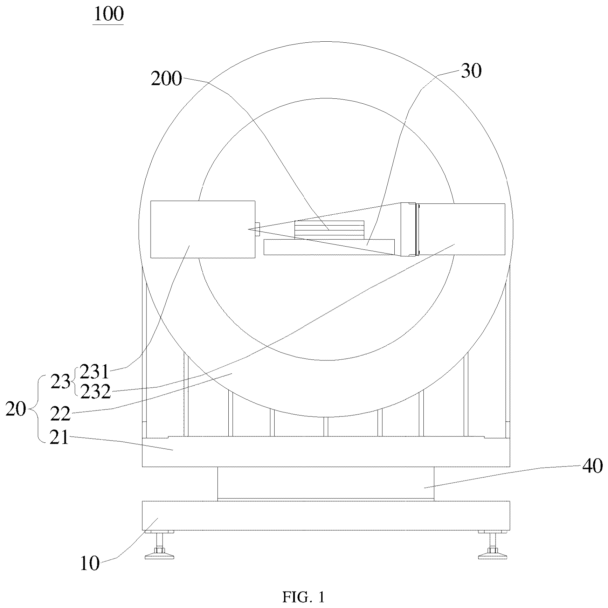

A detection device 100 and a detection method for detecting a battery cell 200 according to embodiments of the present disclosure will be described below with reference to FIG. 1 to FIG. 5.

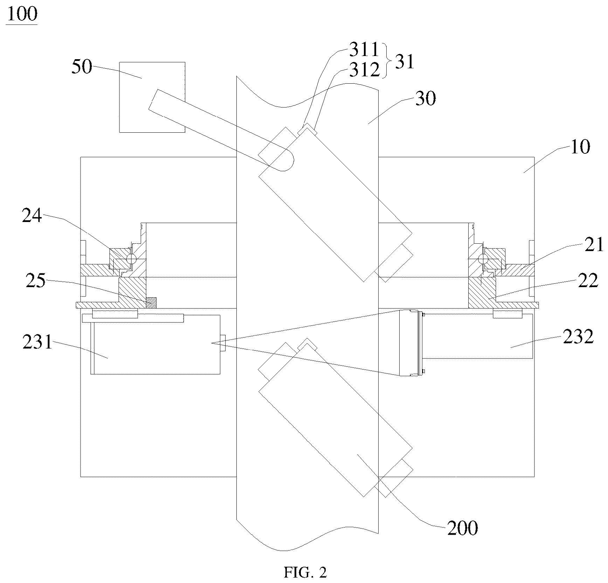

As shown in FIG. 1 and FIG 2, the detection device 100 according to embodiments in the first aspect of the present disclosure includes a supporting mechanism 10, a rotatable mechanism 20, a conveying mechanism 30, and a detection mechanism 23.

The rotatable mechanism 20 is provided on the supporting mechanism 10. The conveying mechanism 30 is used to convey the battery cell 200. The detection mechanism 23 is provided on the rotatable mechanism 20. The detection mechanism 23 includes a radiation source 231 and a detector 232. The radiation source 231 and the detector 232 are used to detect the battery cell 200 on the conveying mechanism 30, and the radiation source 231 and the detector 232 may rotate circumferentially on the rotatable mechanism 20.

Specifically, the rotatable mechanism 20 is arranged on the supporting mechanism 10. The detection mechanism 23 is arranged on the rotatable mechanism 20. The detection mechanism 23 may rotate circumferentially on the rotatable mechanism 20. The conveying mechanism 30 is used to convey the battery cell 200. When it is required to detect the battery cell 200 using the detection device 100, the conveying mechanism 30 conveys the battery cell 200 to a detection region, and the radiation source 231 and the detector 232 of the detection mechanism 23 rotate circumferentially on the rotatable mechanism 20 to detect the battery cell 200 located in the detection region. It should be noted that the detection region is a region between lines connecting the radiation source 231 and the detector 232, and the detection mechanism 23 may detect the battery cell 200 in that region. Through a circumferential rotation on the rotatable mechanism 20, the detection mechanism 23 may perform a multi-directional detection on the battery cell 200, so as to detect alignment and welding of pole pieces of each battery cell 200, without requirements for a placement position and a placement angle of the battery cell 200 on the conveying mechanism 30.

The detection device 100 according to embodiments in the first aspect of the present disclosure may improve the detection quality and the detection efficiency while reducing the placement requirements for the battery cell 200.

Optionally, the detection device further includes a detection control system, which may be configured as follows. The rotatable mechanism 20 controls the rotatable disk 22 to drive the radiation source 231 and the detector 232 to rotate by an angle so as to avoid the battery cell 200.

In some embodiments, the rotatable mechanism 20 may include a rotatable bracket 21 and a rotatable disk 22. The rotatable bracket 21 is provided on the supporting mechanism 10. The rotatable disk 22 may rotate circumferentially relative to the rotatable bracket 21, and the rotatable disk 22 is used to fix the radiation source 231 and the detector 232.

Specifically, the rotatable mechanism 20 is arranged on the supporting mechanism 10 through the rotatable bracket 21. The rotatable bracket 21 may support the rotatable disk 22, and the rotatable disk 22 may rotate circumferentially on the rotatable bracket 21. The radiation source 231 and the detector 232 are fixed on the rotatable disk 22 and may rotate synchronously with the rotatable disk 22. When detecting the battery cell 200, the radiation source 231 and the detector 232 may rotate circumferentially around the battery cell 200 located in the detection region and perform beam scanning on the battery cell 200 in multiple directions.

In this way, through a circumferential rotation of the radiation source 231 and the detector 232 driven by the rotatable disk 22, it is possible to perform multi-directional scanning on the battery cell 200 located in the detection region, thereby improving the detection quality of the battery cell 200.

Further, as shown in FIG. 2, the rotatable mechanism 20 further includes a rotating connector 24. The rotating connector 24 is provided between the rotatable bracket 21 and the rotatable disk 22 to reduce a resistance between the rotatable bracket 21 and the rotatable disk 22 so that the rotatable disk 22 may rotate freely.

It should be noted that a structure of the rotating connector 24 is not specifically limited here. The rotating connector 24 may be a combination of a circular slide rail and a circular slide block, or a bearing provided between the rotatable bracket 21 and the rotatable disk 22.

When the rotating connector 24 is a combination of a circular slide rail and a circular slide block, the circular slide rail may be disposed on one of the rotatable bracket 21 and the rotatable disk 22, and the circular slide block may be disposed on the other of the rotatable bracket 21 and the rotatable disk 22. The circular slide rail and the circular slide block are engaged with each other, so that the rotatable disk 22 may rotate freely on the rotatable bracket 21.

Optionally, the rotatable mechanism 20 further includes a driving motor, a driving gear and a driven tooth portion. The driving motor is fixed on the rotatable bracket 21, the driving gear is disposed on a motor shaft of the driving motor, the driven tooth portion is disposed on an outside of the rotatable disk 22, and the driving gear is engaged with the driven tooth portion. Therefore, the rotatable disk 22 may rotate circumferentially under the drive of the driving motor, thereby improving the efficiency of detecting the battery cell 200.

It should be noted that, the driven tooth portion may be a full circle of external teeth arranged on the outside of the rotatable disk 22, or may be a partial circle of external teeth arranged on the outside of the rotatable disk 22. When the driven tooth portion is a full circle of external teeth arranged on the outside of the rotatable disk 22, the rotatable disk 22 may perform a continuous circumferential rotation under the drive of the driving motor, and when the driven tooth portion is a partial circle of external teeth arranged on the outside of the rotatable disk 22, the rotatable disk 22 may perform a reciprocating rotation at an angle under the drive of the driving motor, which may be selected according to actual desires.

Further, the radiation source 231 and the detector 232 may move in a diameter direction of the rotatable disk 22 so that the radiation source 231 and the detector 232 may be switched between a detection position and an avoidance position.

Specifically, the radiation source 231 and the detector 232 may move respectively in the diameter direction of the rotatable disk 22 to be close to or away from each other. When moving close to the center of the rotatable disk 22, the radiation source 231 and the detector 232 may move to the detection position, where the radiation source 231 is close to the detector 232 and a high detection accuracy may be achieved. When moving away from the center of the rotatable disk 22, the radiation source 231 and the detector 232 may move to the avoidance position, where the radiation source 231 is far away from the detector 232. When the conveying mechanism 30 conveys the battery cell 200 to the detection region, a corner of the battery cell 200 may interfere with the detection mechanism 23. By switching the radiation source 231 and the detector 232 to the avoidance position, it is possible to avoid the battery cell 200 so as to prevent damage to the battery cell 200 and the detection mechanism 23.

Therefore, by switching the radiation source 231 and the detector 232 between the detection position and the avoidance position, it is possible to improve a detection safety while ensuring the detection accuracy.

In some embodiments, a movable mechanism 40 is provided between the rotatable mechanism 20 and the supporting mechanism 10, and the movable mechanism 40 may cause a relative displacement of the rotatable mechanism 20 on the supporting mechanism 10.

Specifically, battery cells 200 may have different specifications depending on different products. When the detection mechanism 23 detects battery cells 200 having different specifications, the battery cells 200 having different specifications may be detected at different positions. By providing the movable mechanism 40 between the rotatable mechanism 20 and the supporting mechanism 10, it is possible to adjust the position of the rotatable mechanism to adapt to the detection of the battery cells 200 having different specifications.

Therefore, the detection device 100 may detect more types of battery cells 200, and a universality of the detection device 100 may be improved, so that a detection cost of battery cells 200 may be reduced.

Optionally, the movable mechanism 40 may be configured as a rotatable table 41, and the rotatable mechanism 20 may rotate relative to the supporting mechanism 10 under support of the rotatable table 41.

Specifically, by providing the rotatable table 41, it is possible to form an angle between the rotatable mechanism 20 and the conveying mechanism 30. When a battery cell 200 is detected, in order to improve the detection efficiency, a corner of the battery cell 200 is generally detected, which requires that a line connecting the radiation source 231 and the detector 232 has an angle with a center line of the battery cell 200. By rotating the rotatable mechanism 20 at an angle through the rotatable table 41, the center line of the battery cell 200 may be parallel to the extension direction of the conveying mechanism 30, so that a space occupation of the battery cell 200 on the conveying mechanism 30 may be reduced. When placing battery cells 200, two battery cells 200 may be placed end-to-end while maintaining a safety distance, and placed diagonally on the conveying mechanism 30. In this way, the detection mechanism 23 may detect two groups of battery cells 200, thereby improving the detection efficiency.

Further, optionally, the movable mechanism 40 may be configured as a translation mechanism 42. The rotatable mechanism 20 may move in a first direction and a second direction under support of the translation mechanism 42. The first direction is parallel to a rotation axis of the detection mechanism 23, and the second direction is perpendicular to the rotation axis of the detection mechanism 23.

Specifically, by providing the translation mechanism 42, the rotatable mechanism 20 may move in the first direction and the second direction to achieve an adjustment of a relative position to the conveying mechanism 30. When detecting battery cells 200 having different specifications, the battery cells 200 having different specifications are detected at different positions. Through the translation mechanism 42, it is possible to adjust the detection region of the detection mechanism 23 so that a corner of the battery cell 200 is located in the detection region, thereby improving the detection accuracy. Moreover, through the translation mechanism 42, the detection mechanism 23 may avoid the battery cell 200 in a case of a positional interference between the detection mechanism 23 and the battery cell 200, thereby improving a detection safety.

Furthermore, a first slide rail is provided on a side of the supporting mechanism 10 facing the translation mechanism 42, a first slide block is provided on a side of the translation mechanism 42 facing the supporting mechanism 10, and the first slide block is slidably matched with the first slide rail to cause the rotatable mechanism 20 to move in the first direction. A second slide rail is provided on a side of the translation mechanism 42 facing the rotatable mechanism 20, a second slide block is provided on a side of the rotatable mechanism 20 facing the translation mechanism 42, and the second slide block is slidably matched with the second slide rail to cause the rotatable mechanism 20 to move in the second direction. Through the cooperation between the first slide rail and the first slide block and the cooperation between the second slide rail and the second slide block, the movement of the rotatable mechanism 20 may be smoother, and the difficulty of operation may be reduced.

In some embodiments, the conveying mechanism 30 extends parallel to the rotation axis of the detection mechanism 23, or the positioning mechanism extends perpendicular to the rotation axis of the detection mechanism 23.

Specifically, when the conveying mechanism 30 extends parallel to the rotation axis of the detection mechanism 23, the conveying mechanism 30 may pass through a center of the rotatable mechanism 20. When the conveying mechanism 30 extends perpendicular to the rotation axis of the detection mechanism 23, the conveying mechanism 30 may convey the battery cell 200 on a side of the detection mechanism 23, and the battery cell 200 may move in steps under the drive of the conveying mechanism 30. A plurality of battery cells 200 to be detected may be placed at intervals on the conveying mechanism 30. When the conveying mechanism 30 conveys the battery cells 200 to the detection region, the conveying mechanism 30 stops, and the detection mechanism 23 rotates under the drive of the rotatable disk 22 to detect the battery cells 200. After the detection is completed, the conveying mechanism 30 moves the battery cells 200 out of the detection region. Then, a next group of battery cells 200 to be detected may move to the detection region for detection.

In this way, it is possible to perform a continuous detection of battery cells 200, thereby improving the detection efficiency of battery cells 200.

Furthermore, the conveying mechanism 30 further includes a plurality of positioning modules 31 arranged at intervals, and the positioning modules 31 are used to position battery cells 200. When battery cells 200 are placed on the conveying mechanism 30, the battery cells 200 may be positioned by the positioning modules 31 so that a detected corner of each battery cell 200 is in a right position. When the conveying mechanism 30 moves the battery cell 200 to the detection region, it may be ensured that the detected corner of each battery cell 200 is in the same position, thereby improving the detection accuracy.

Optionally, the positioning module 31 includes a first positioning portion 311 and a second positioning portion 312. The first positioning portion 311 and the second positioning portion 312 are perpendicular to each other, and the first positioning portion 311 and the second positioning portion 312 are both fixed on the conveying mechanism 30. A positioning space is formed on an inner side of an angle formed by the first positioning portion 311 and the second positioning portion 312. The corner of the battery cell 200 to be detected may be placed in the positioning space, and two adjacent sides of the battery cell 200 are respectively against the first positioning portion 311 and the second positioning portion 312.

Specifically, when it is required to detect the battery cell 200, the battery cell 200 may be placed on the conveying mechanism 30. A corner of the battery cell 200 may be placed in the positioning space, and two adjacent sides of the corner may be respectively against the first positioning portion 311 and the second positioning portion 312, so that the battery cell 200 may be fixed on the conveying mechanism 30. The battery cells 200 may be placed in sequence in this way to ensure a regular placement of the battery cells 200.

In this way, when the corner of the battery cell 200 is subsequently detected using the detection mechanism 23, the detection may be performed without adjusting the position of the battery cell 200, thereby improving the detection efficiency while ensuring the detection accuracy.

It should be noted that a connection method between the positioning module 31 and the conveying mechanism 30 is not specifically limited here. For example, the positioning module 31 may be connected to the conveying mechanism 30 by bonding, screwing or snapping, which may be selected according to actual needs.

Further, optionally, the first positioning portion 311 and the second positioning portion 312 may be grooves or protrusions formed on the conveying mechanism 30. When the battery cell 200 is placed on the conveying mechanism 30, the corner of the battery cell 200 may be placed in the grooves or protrusions, so that the position of the battery cell 200 may be fixed.

Optionally, the positioning module 31 is fixed to the conveying mechanism 30 at a predetermined angle. The predetermined angle is in a range from 0° to 75°.

In an example, the predetermined angle may be 0°, 5°, 10°, 15°, 20°, 25°, 30°, 35°, 40°, 45°, 50°, 55°, 60°, 65°, 70°, or 75°, which may be determined according to actual needs.

It should be noted that the number and location of the positioning modules 31 on the conveying mechanism 30 are not specifically limited here. For example, the positioning modules 31 may be arranged at intervals on a center line of the conveying mechanism 30, or the positioning modules 31 may be arranged side by side on both sides of the center line of the conveying mechanism 30, which may be selected according to actual needs.

It may be understood that, depending on different arrangements of the positioning modules 31, the battery cells 200 may be placed on the conveying mechanism 30 in different ways.

When the positioning modules 31 are arranged at intervals on the center line of the conveying mechanism 30, in order to ensure the quality of the detection mechanism 23 detecting the battery cell 200, the positioning modules 31 may be arranged at a predetermined angle so that the detection mechanism 23 may detect corners of the battery cells 200. By placing the corner of the battery cell 200 in the positioning space so that adjacent sides of the corner are against the first positioning portion 311 and the second positioning portion 312 respectively, it is possible to place a plurality of battery cells 200 at equal distances on the conveying mechanism 30. For example, if the predetermined angle of the positioning module 31 is set to 45°, the battery cell 200 is also tilted at 45° on the conveying mechanism 30. When the conveying mechanism 30 conveys the battery cell 200 to the detection region, the detection mechanism 23 may perform a circumferential detection on the corners of the battery cell 200, thereby improving the detection accuracy.

When the positioning modules 31 are arranged side by side on both sides of the center line of the conveying mechanism 30, the predetermined angle of the positioning modules 31 may be set to 0° and the positioning modules 31 may be arranged diagonally, so that two battery cells 200 may be fixed. If a rotatable table 41 is provided in the detection device 100, the rotatable mechanism 20 may be set to an angle through the rotatable table 41 so that the detection mechanism 23 forms an angle with the center of the conveying mechanism 30. In this case, if two battery cells 200 are arranged on the conveying mechanism 30, the two battery cells 200 may be placed diagonally and end to end on both sides of the center line of the conveying mechanism 30 under the constraint of the positioning modules 31. The detection mechanism 23 may detect the corners of the two battery cells 200, thereby improving the detection efficiency.

As shown in FIG. 2, in some embodiments, the rotatable mechanism 20 further includes a position sensor 25. The position sensor 25 may detect the position of the battery cell 200 on the conveying mechanism 30. Through the position sensor 25, it is possible to detect the position of the battery cell 200 on the conveying mechanism 30. The position sensor 25 is in signal connection with the rotatable mechanism 20. The position sensor 25 may perform detection before the conveying mechanism 30 conveys the battery cell 200 to enter the detection region. When detecting that the position of the battery cell 200 is about to interfere with the detection mechanism 23, the position sensor 25 may send an avoidance signal to the rotatable mechanism 20, so that the rotatable disk 22 drives the radiation source 231 and the detector 232 to stop a circumferential rotation and avoid the battery cell 200. When the position sensor 25 detects that the position of the battery cell 200 may not interfere with the detection mechanism 23 or no battery cell 200 is detected, the rotatable disk 22 drives the radiation source 231 and the detector 232 to continue the circumferential rotation.

In this way, when detecting the battery cell 200, it is possible to avoid a collision of the battery cell 200 and the detection mechanism 23, thereby improving the detection safety.

It should be noted that a type of the position sensor 25 is not specifically limited here. For example, the position sensor 25 may be an optical position sensor 25, an ultrasonic position sensor 25, a light curtain sensor, or a camera.

When the position sensor 25 is an optical position sensor 25, a light beam is emitted through a transmitter. If the battery cell 200 located on the conveying mechanism 30 is about to interfere with the rotatable mechanism 20, the light beam emitted by the transmitter may be reflected back to the optical position sensor 25 when the light beam comes into contact with the battery cell 200. Then, the sensor may calculate a distance between the rotatable mechanism 20 and the battery cell 200. When the distance between the two is less than a predetermined threshold, the optical position sensor 25 sends an avoidance signal to the rotatable mechanism 20, and the rotatable disk 22 drives the radiation source 231 and the detector 232 to stop the circumferential rotation and avoid the battery cell 200. When the optical position sensor 25 receives no reflected signal, or it is calculated after receiving the signal that the distance between the battery cell 200 and the rotatable mechanism 20 is greater than or equal to the predetermined threshold, the rotatable disk 22 may drive the radiation source 231 and the detector 232 to continue the circumferential rotation.

When the position sensor 25 is a light curtain sensor, the light curtain sensor may be provided upstream of the rotatable mechanism 20 and near the conveying mechanism 30. When the light curtain sensor detects that a light curtain is blocked, the light curtain sensor sends an avoidance signal to the rotatable mechanism 20, so that the rotatable disk 20 drives the radiation source 231 and the detector 232 to stop the circumferential rotation and avoid the battery cell 200. When the light curtain sensor detects that the light curtain is not blocked, the rotatable disk 22 may drive the radiation source 231 and the detector 232 to continue the circumferential rotation.

When the position sensor 25 is a camera, the camera may be provided on the rotatable bracket 21. The camera may photograph the battery cell 200 located on the conveying mechanism 30. By identifying a position of the battery cell 200 in an image, it may be determined whether the battery cell 200 is about to interfere with the rotatable mechanism 20. When it is calculated from the image taken by the camera that the battery cell 200 is about to collide with the rotatable mechanism 20, the camera may send an avoidance signal to the rotatable mechanism 20, so that the rotatable disk 22 drives the radiation source 231 and the detector 232 to stop the circumferential rotation and avoid the battery cell 200. When the battery cell 200 does not exist in the image taken by the camera or it is calculated from the image taken by the camera that the battery cell 200 will not collide with the rotatable mechanism 20, the camera may send a signal to the rotatable disk 22, so that the rotatable disk 22 drives the radiation source 231 and the detector 232 to continue the circumferential rotation.

It should be noted that the position of the position sensor 25 on the detection device 100 is not specifically limited here and may be determined as needed, as long as the position sensor 25 may detect whether the battery cell 200 is about to collide with the rotatable mechanism 20.

In some embodiments, the detection device 100 further includes a selection mechanism 50. The selection mechanism 50 is used to transfer the battery cell 200 to a waste region when the detection mechanism 23 detects that the battery cell 200 is unqualified.

Specifically, the selection mechanism 50 is used to transfer the unqualified battery cell 200 to the waste region when the detection mechanism 23 detects that the battery cell 200 is unqualified. After the detection mechanism 23 completes the detection of the battery cell 200, if a battery cell 200 with an internal defect fails to meet the requirements, the selection mechanism 50 may select out the unqualified battery cell 200 on the conveying mechanism 30 and transfer the unqualified battery cell 200 to the waste region, so that a qualified battery cell 200 may enter a next process. In this way, the detection efficiency of the detection device 100 may be improved.

It may be understood that a detection system corresponding to the detection device 100 in the present disclosure may number the battery cells 200 detected by the detection device 100 one by one. When the selection mechanism 50 transfers the unqualified battery cell 200 to the waste region, the detection system may eliminate the number corresponding to the unqualified battery cell 200 and the image corresponding to the unqualified battery cell 200.

The battery cell 200 is detected by the detection mechanism 23 while being conveyed by the conveying mechanism 30. If the detection mechanism 23 detects that the battery cell 200 is unqualified, the selection mechanism 50 transfers the battery cell 200 to the waste region, while in the detection system, the number and image corresponding to the unqualified battery cell 200 are eliminated. When the battery cell 200 is detected by the detection mechanism 23 and is determined to be qualified, the qualified battery cell 200 may enter the next process. Therefore, a system resource occupancy rate may be reduced, and the detection device 100 may have a higher detection efficiency.

According to embodiments in a second aspect of the present disclosure, a detection method for detecting the battery cell 200 is provided. The detection method is applicable to the detection device 100 of any one of the above embodiments. The detection method includes: providing the battery cell 200 on the conveying mechanism 30; conveying the battery cell 200 by the conveying mechanism 30; and detecting the battery cell 200 by the detection mechanism 23.

In some embodiments, when providing the battery cell 200 on the conveying mechanism 30, the battery cell 200 is placed at a predetermined angle, which is in a range from 15° to 75°.

Specifically, by placing the battery cell 200 at the predetermined angle, a center line of the battery cell 200 may have an angle with an extension direction of the conveying mechanism 30, that is, the battery cell 200 is placed on the conveying mechanism 30 obliquely, so that when the conveying mechanism 30 moves the battery cell 200 to the detection region, the corners of the battery cell 200 may be located in the detection region.

In this way, it is possible to improve the detection efficiency of the detection device 100 while improving the detection effect.

In an example, the predetermined angle may be 15°, 20°, 25°, 30°, 35°, 40°, 45°, 50°, 55°, 60°, 65°, 70°, or 75°, which may be set according to actual needs.

The detection method for detecting the battery cell 200 is described below according to specific embodiments of the present disclosure.

### First Embodiment

As shown in FIG. 2, the battery cell 200 is provided on the conveying mechanism 30, and the battery cell 200 is placed at a predetermined angle. The rotatable disk 22 drives the radiation source 231 and the detector 232 to rotate circumferentially. The conveying mechanism 30 extends parallel to the rotation axis of the detection mechanism 23, and the conveying mechanism 30 conveys the battery cell 200. The position sensor 25 detects the position of the battery cell 200, and sends an avoidance signal to the rotatable mechanism 20 if it is detected that the battery cell 200 is about to collide with the rotatable mechanism 20 when entering the detection region. The rotatable mechanism 20 receives the avoidance signal from the position sensor 25, and controls the rotatable disk 22 to drive the radiation source 231 and the detector 232 to rotate by an angle to avoid the battery cell 200. The conveying mechanism 30 conveys the battery cell 200 to the detection region. The position sensor 25 detects the position of the battery cell 200, and sends a signal to the rotatable mechanism 20 if no battery cell 200 is detected or if it is detected that the position of the battery cell 200 will not collide with the rotatable mechanism 20. After receiving the signal from the position sensor 25, the rotatable mechanism 20 controls the rotatable disk 22 to drive the radiation source 231 and the detector 232 to rotate circumferentially to detect the battery cell 200. After the scanning is completed, the position sensor 25 detects the position of the battery cell 200, and sends an avoidance signal to the rotatable mechanism 20 if it is detected that the battery cell 200 is about to collide with the rotatable mechanism 20 in a process of outputting the battery cell 200. The rotatable mechanism 20 receives the avoidance signal from the position sensor 25, and controls the rotatable disk 22 to drive the radiation source 231 and the detector 232 to rotate by an angle to avoid the battery cell 200. The conveying mechanism 30 conveys the battery cell 200 to move out of the detection region. The selection mechanism 50 transfers the unqualified battery cell 200 to the waste region.

### Second Embodiment

As shown in FIG. 2, the battery cell 200 is provided on the conveying mechanism 30, and the battery cell 200 is placed at a predetermined angle. The rotatable disk 22 drives the radiation source 231 and the detector 232 to rotate circumferentially. The conveying mechanism 30 extends parallel to the rotation axis of the detection mechanism 23, and the conveying mechanism 30 conveys the battery cell 200. The position sensor 25 detects the position of the battery cell 200, and sends an avoidance signal to the rotatable mechanism 20 if it is detected that the battery cell 200 is about to collide with the rotatable mechanism 20 when entering the detection region. The rotatable mechanism 20 receives the avoidance signal from the position sensor 25, and the radiation source 231 and the detector 232 are switched from the detection position to the avoidance position to avoid the battery cell 200. The conveying mechanism 30 conveys the battery cell 200 to the detection region. The position sensor 25 detects the position of the battery cell 200, and sends a signal to the rotatable mechanism 20 if no battery cell 200 is detected or if it is detected that the position of the battery cell 200 will not collide with the rotatable mechanism 20. After the rotatable mechanism 20 receives the signal from the position sensor 25, the radiation source 231 and the detector 232 are switched from the avoidance position to the detection position. The rotatable mechanism 20 controls the rotatable disk 22 to drive the radiation source 231 and the detector 232 to rotate circumferentially to detect the battery cell 200. After the scanning is completed, the position sensor 25 detects the position of the battery cell 200, and sends an avoidance signal to the rotatable mechanism 20 if it is detected that the battery cell 200 is about to collide with the rotatable mechanism 20 in a process of outputting the battery cell 200. The rotatable mechanism 20 receives the avoidance signal from the position sensor 25, and the radiation source 231 and the detector 232 are switched from the detection position to the avoidance position to avoid the battery cell 200. The conveying mechanism 30 conveys the battery cell 200 to move out of the detection region. The selection mechanism 50 transfers the unqualified battery cell 200 to the waste region.

### Third embodiment

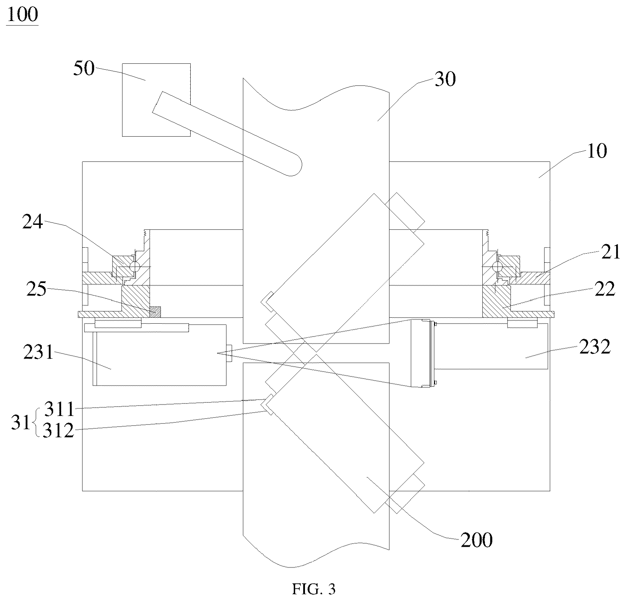

As shown in FIG. 3, the conveying mechanism 30 includes reciprocating conveying mechanisms 30 provided on both sides of the detection mechanism 23. The battery cells 200 are provided on the conveying mechanism 30, and the battery cells 200 are placed at a predetermined angle. The rotatable disk 22 drives the radiation source 231 and the detector 232 to rotate circumferentially. The conveying mechanism 30 extends parallel to the rotation axis of the detection mechanism 23, and the conveying mechanism 30 conveys the battery cells 200. The reciprocating conveying mechanisms 30 on both sides of the detection mechanism 23 respectively move two battery cells 200 to the detection region. The position sensor 25 detects the positions of the battery cells 200, and sends a signal to the rotatable mechanism 20 if no battery cell 200 is detected or it is detected that the battery cells 200 will not collide with the rotatable mechanism 20. After receiving the signal from the position sensor 25, the rotatable mechanism 20 controls the rotatable disk 22 to drive the radiation source 231 and the detector 232 to rotate circumferentially to detect the battery cells 200. The two reciprocating conveying mechanisms 30 move the battery cells 200 out of the detection region. The selection mechanism 50 transfers the unqualified battery cell 200 to the waste region.

### Fourth embodiment

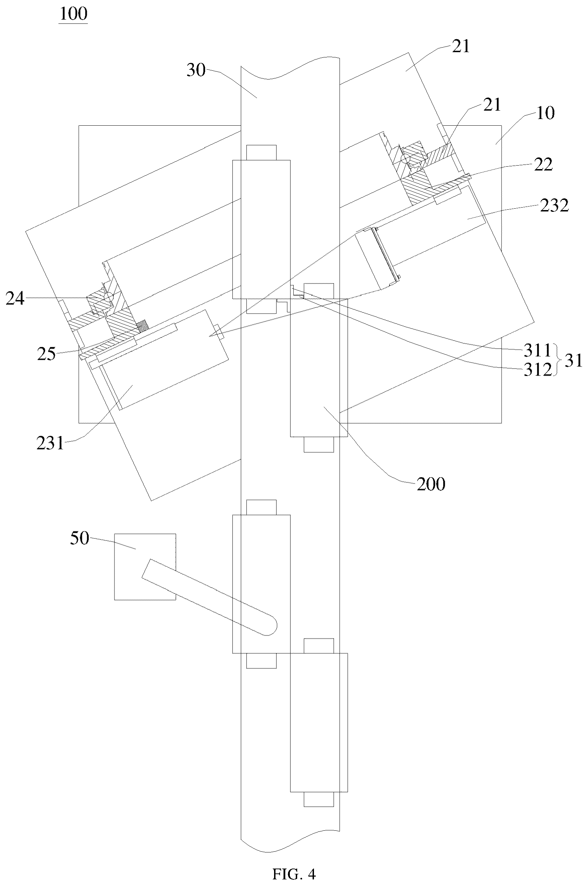

As shown in FIG. 4, the rotatable mechanism 20 is rotated to a predetermined angle by the rotatable table 41. The battery cells 200 are provided in the positioning modules 31. The positioning modules 31 are arranged side by side on both sides of the center line of the conveying mechanism 30, and the battery cells 200 are provided diagonally and end to end on the conveying mechanism 30. The rotatable disk 22 drives the radiation source 231 and the detector 232 to rotate circumferentially. The extension direction of the conveying mechanism 30 has a predetermined angle with the rotation axis of the detection mechanism 23, and the conveying mechanism 30 conveys the battery cells 200. The position sensor 25 detects the position of the battery cell 200, and sends a transmission signal to the rotatable mechanism 20 if no battery cell 200 is detected or if it is detected that the position of the battery cell 200 will not collide with the rotatable mechanism 20. After the rotatable mechanism 20 receives the transmission signal from the position sensor 25, the rotatable disk 22 may rotate normally. The conveying mechanism 30 conveys the battery cell 200 to the detection region. The position sensor 25 detects the position of the battery cell 200, and sends a signal to the rotatable mechanism 20 if no battery cell 200 is detected or if it is detected that the position of the battery cell 200 will not collide with the rotatable mechanism 20. After receiving the signal from the position sensor 25, the rotatable mechanism 20 controls the rotatable disk 22 to drive the radiation source 231 and the detector 232 to rotate circumferentially to detect the battery cell 200. The conveying mechanism 30 conveys the battery cell 200 to move out of the detection region. The selection mechanism 50 transfers the unqualified battery cell 200 to the waste region.

### Fifth embodiment

As shown in FIG. 4, the rotatable mechanism 20 is rotated to a predetermined angle by the rotatable table 41. The battery cells 200 are placed in the positioning modules 31. The positioning modules 31 are arranged side by side on both sides of the center line of the conveying mechanism 30, and the battery cells 200 are provided diagonally and end to end on the conveying mechanism 30. The rotatable disk 22 drives the radiation source 231 and the detector 232 to rotate circumferentially. The extension direction of the conveying mechanism 30 has a predetermined angle with the rotation axis of the detection mechanism 23, and the conveying mechanism 30 conveys the battery cells 200. The position sensor 25 detects the positions of the battery cells 200, and sends an avoidance signal to the rotatable mechanism 20 if it is detected that the battery cells 200 are about to collide with the rotatable mechanism 20 when entering the detection region. The rotatable mechanism 20 receives the avoidance signal from the position sensor 25, and controls the rotatable disk 22 to drive the radiation source 231 and the detector 232 to rotate an angle to avoid the battery cells 200. The conveying mechanism 30 conveys the battery cells 200 to the detection region. The position sensor 25 detects the positions of the battery cells 200, and sends a signal to the rotatable mechanism 20 if no battery cell 200 is detected or if it is detected that the positions of the battery cells 200 will not collide with the rotatable mechanism 20. After receiving the signal from the position sensor 25, the rotatable mechanism 20 controls the rotatable disk 22 to drive the radiation source 231 and the detector 232 to rotate circumferentially to detect the battery cells 200. After the scanning is completed, the position sensor 25 detects the positions of the battery cells 200, and sends an avoidance signal to the rotatable mechanism 20 if it is detected that the battery cells 200 are about to collide with the rotatable mechanism 20 in a process of outputting the battery cells 200. The rotatable mechanism 20 receives the avoidance signal from the position sensor 25, and controls the rotatable disk 22 to drive the radiation source 231 and the detector 232 to rotate an angle to avoid the battery cells 200. The conveying mechanism 30 conveys the battery cells 200 to move out of the detection region. The selection mechanism 50 transfers the unqualified battery cell 200 to the waste region.

### Sixth embodiment

As shown in FIG. 4, the rotatable mechanism 20 is rotated to a predetermined angle by the rotatable table 41. The battery cells 200 are provided in the positioning modules 31. The positioning modules 31 are arranged side by side on both sides of the center line of the conveying mechanism 30, and the battery cells 200 are placed diagonally and end to end on the conveying mechanism 30. The rotatable disk 22 drives the radiation source 231 and the detector 232 to rotate circumferentially. The extension direction of the conveying mechanism 30 has a predetermined angle with the rotation axis of the detection mechanism 23, and the conveying mechanism 30 conveys the battery cells 200. The position sensor 25 detects the positions of the battery cells 200, and sends an avoidance signal to the rotatable mechanism 20 if it is detected that the battery cells 200 are about to collide with the rotatable mechanism 20 when entering the detection region. The rotatable mechanism 20 receives the avoidance signal from the position sensor 25, and the radiation source 231 and the detector 232 are switched from the detection position to the avoidance position to avoid the battery cells 200. The conveying mechanism 30 conveys the battery cells 200 to the detection region. The position sensor 25 detects the positions of the battery cells 200, and sends a signal to the rotatable mechanism 20 if no battery cell 200 is detected or if it is detected that the positions of the battery cells 200 will not collide with the rotatable mechanism 20. After the rotatable mechanism 20 receives the signal from the position sensor 25, the radiation source 231 and the detector 232 are switched from the avoidance position to the detection position. The rotatable mechanism 20 controls the rotatable disk 22 to drive the radiation source 231 and the detector 232 to rotate circumferentially to detect the battery cells 200. After the scanning is completed, the position sensor 25 detects the positions of the battery cells 200, and sends an avoidance signal to the rotatable mechanism 20 if it is detected that the battery cells 200 are about to collide with the rotatable mechanism 20 in a process of outputting the battery cell 200. The rotatable mechanism 20 receives the avoidance signal from the position sensor 25, and the radiation source 231 and the detector 232 are switched from the detection position to the avoidance position to avoid the battery cells 200. The conveying mechanism 30 conveys the battery cells 200 to move out of the detection region. The selection mechanism 50 transfers the unqualified battery cell 200 to the waste region.

### Seventh Embodiment

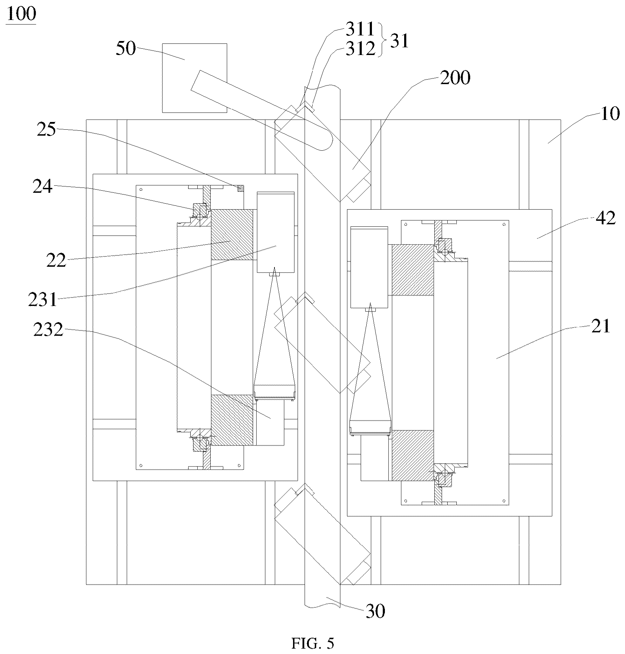

As shown in FIG. 5, the battery cell 200 is provided on the conveying mechanism 30, and the battery cell 200 is placed at a predetermined angle. The rotatable disk 22 drives the radiation source 231 and the detector 232 to rotate circumferentially. The conveying mechanism 30 extends perpendicular to the rotation axis of the detection mechanism 23, and the conveying mechanism 30 conveys the battery cell 200. The position sensor 25 detects the position of the battery cell 200, and sends an avoidance signal to the rotatable mechanism 20 if it is detected that the battery cell 200 is about to collide with the rotatable mechanism 20 when entering the detection region. The rotatable mechanism 20 receives the avoidance signal from the position sensor 25, and controls the rotatable disk 22 to drive the radiation source 231 and the detector 232 to rotate an angle to avoid the battery cell 200. The conveying mechanism 30 conveys the battery cell 200 to the detection region. The position sensor 25 detects the position of the battery cell 200, and sends a signal to the rotatable mechanism 20 if no battery cell 200 is detected or if it is detected that the position of the battery cell 200 will not collide with the rotatable mechanism 20. After receiving the signal from the position sensor 25, the rotatable mechanism 20 controls the rotatable disk 22 to drive the radiation source 231 and the detector 232 to rotate circumferentially to detect the battery cell 200. After the scanning is completed, the position sensor 25 detects the position of the battery cell 200, and sends an avoidance signal to the rotatable mechanism 20 if it is detected that the battery cell 200 is about to collide with the rotatable mechanism 20 in a process of outputting the battery cell 200. The rotatable mechanism 20 receives the avoidance signal from the position sensor 25, and controls the rotatable disk 22 to drive the radiation source 231 and the detector 232 to rotate an angle to avoid the battery cell 200. The conveying mechanism 30 conveys the battery cell 200 to move out of the detection region. The selection mechanism 50 transfers the unqualified battery cell 200 to the waste region.

In the description of this specification, the description with reference to the terms "embodiment", "example", etc. means that a specific feature, structure, material or characteristic described in conjunction with that embodiment or example is contained in at least one embodiment or example of the present disclosure. In this specification, the schematic expressions of the above terms do not necessarily refer to the same embodiment or example. Furthermore, the specific features, structures, materials or characteristics described may be combined in any suitable manner in any one or more embodiments or examples.

Although embodiments of the present disclosure have been shown and described, it will be appreciated by those skilled in the art that various changes, modifications, substitutions and variations may be made to embodiments without departing from the principles and spirit of the present disclosure, and that the scope of the present disclosure is defined by the claims and their equivalents.

## Claims

1. A detection device, comprising:
a supporting mechanism (10);
a rotatable mechanism (20) provided on the supporting mechanism (10);
a conveying mechanism (30) configured to convey a battery cell (200); and
a detection mechanism (23) provided on the rotatable mechanism (20), wherein the detection mechanism (23) comprises a radiation source (231) and a detector (232), the radiation source (231) and the detector (232) are configured to detect the battery cell (200) on the conveying mechanism (30), and the radiation source (231) and the detector (232) are rotatable circumferentially on the rotatable mechanism (20).

2. The detection device according to claim 1, wherein the rotatable mechanism (20) comprises:
a rotatable bracket (21) provided on the supporting mechanism (10); and
a rotatable disk (22) rotatable circumferentially relative to the rotatable bracket (21), and configured to fix the radiation source (231) and the detector (232).

3. The detection device according to claim 2, wherein the radiation source (231) and the detector (232) are movable in a diameter direction of the rotatable disk (22) so as to cause the radiation source (231) and the detector (232) to switch between a detection position and an avoidance position.

4. The detection device according to claim 1, wherein a movable mechanism (40) is provided between the rotatable mechanism (20) and the supporting mechanism (10), and the movable mechanism (40) is configured to cause a relative displacement of the rotatable mechanism (20) on the supporting mechanism (10).

5. The detection device according to claim 4, wherein the movable mechanism (40) is configured as a rotatable table (41), and the rotatable mechanism (20) is rotatable relative to the supporting mechanism (10) under support of the rotatable table (41).

6. The detection device according to claim 4, wherein the movable mechanism (40) is configured as a translation mechanism (42), the rotatable mechanism (20) is movable in a first direction and a second direction under support of the translation mechanism (42), the first direction is parallel to a rotation axis of the detection mechanism (23), and the second direction is perpendicular to the rotation axis of the detection mechanism (23).

7. The detection device according to claim 1, wherein the conveying mechanism (30) extends parallel to a rotation axis of the detection mechanism (23), or a positioning mechanism extends perpendicular to a rotation axis of the detection mechanism (23).

8. The detection device according to claim 7, wherein the conveying mechanism (30) further comprises a plurality of positioning modules (31) arranged at intervals, and the positioning module (31) is configured to position the battery cell (200).

9. A detection method for detecting a battery cell using the detection device of any one of claims 1 to 8, the detection method comprising:
providing a battery cell (200) on a conveying mechanism (30);
conveying the battery cell (200) to a detection region by using the conveying mechanism (30); and
detecting the battery cell (200) by using a detection mechanism (23).

10. The detection method according to claim 9, wherein the battery cell (200) is placed at a predetermined angle when the battery cell (200) is provided on the conveying mechanism (30), and the predetermined angle is in a range from 15° to 75°.

11. The detection method according to claim 10, further comprising: before detecting the battery cell (200) by using the detection mechanism (23),
driving, by using a rotatable disk (22), a radiation source (231) and a detector (232) to rotate by an angle to avoid the battery cell (200);
conveying the battery cell (200) to a detection region by using the conveying mechanism (30);
driving, by using the rotatable disk (22), the radiation source (231) and the detector (232) to rotate circumferentially to detect the battery cell (200); and
conveying the battery cell (200) to move out of the detection region by using the conveying mechanism (30).

12. The detection method according to claim 10, further comprising: before detecting the battery cell (200) by using the detection mechanism (23),
driving, by using a rotatable disk (22), a radiation source (231) and a detector (232) to rotate circumferentially;
switching the radiation source (231) and the detector (232) from a detection position to an avoidance position;
conveying the battery cell (200) to move to a detection region by using the conveying mechanism (30);
switching the radiation source (231) and the detector (232) from the avoidance position to the detection position;
driving, by using the rotatable disk (22), the radiation source (231) and the detector (232) to rotate circumferentially to detect the battery cell (200); and
conveying the battery cell (200) to move out of the detection region by using the conveying mechanism (30).

13. The detection method according to claim 10, wherein the conveying mechanism (30) comprises reciprocating conveying mechanisms (30) provided on both sides of the detection mechanism (23), and the detection method further comprises: before detecting the battery cell (200) by using the detection mechanism (23),
driving, by using a rotatable disk (22), a radiation source (231) and a detector (232) to rotate circumferentially;
moving two battery cells (200) to a detection region by respectively using the reciprocating conveying mechanisms (30) located on both sides of the detection mechanism (23);
driving, by using the rotatable disk (22), the radiation source (231) and the detector (232) to rotate circumferentially to detect the battery cells (200); and
moving the battery cells (200) out of the detection region by using the two reciprocating conveying mechanisms (30).

14. The detection method according to claim 9, further comprising: before detecting the battery cell (200) by using the detection mechanism (23),
rotating the rotatable mechanism (20) to a predetermined angle, wherein the predetermined angle is in a range from 15° to 75°.

15. The detection method according to claim 14, further comprising: before detecting the battery cell (200) by using the detection mechanism (23),
driving, by using a rotatable disk (22), a radiation source (231) and a detector (232) to rotate circumferentially;
switching the radiation source (231) and the detector (232) from a detection position to an avoidance position;
conveying the battery cell (200) to move to a detection region by using the conveying mechanism (30);
switching the radiation source (231) and the detector (232) from the avoidance position to the detection position;
driving, by using the rotatable disk (22), the radiation source (231) and the detector (232) to rotate circumferentially to detect the battery cell (200); and
conveying the battery cell (200) to move out of the detection region by using the conveying mechanism (30).
